**Europäisches Patentamt**

**European Patent Office**

**Office européen des brevets**

(19)

(11) Numéro de publication : **0 077 710**
**B1**

(12) **FASCICULE DE BREVET EUROPÉEN**

(45) Date de publication du fascicule du brevet :
30.12.86

(51) Int. Cl.⁴ : **B 62 D 5/083**

(21) Numéro de dépôt : **82401835.2**

(22) Date de dépôt : **06.10.82**

(54) **Distributeur hydraulique rotatif, notamment pour système de direction assistée de véhicule.**

(30) Priorité : **14.10.81 ES 506793**

(43) Date de publication de la demande :
**27.04.83 Bulletin 83/17**

(45) Mention de la délivrance du brevet :
**30.12.86 Bulletin 86/52**

(84) Etats contractants désignés :
**DE FR GB IT**

(56) Documents cités :
**FR-A- 2 372 065**
**GB-A- 1 588 593**
**GB-A- 2 083 424**
**US-A- 3 227 178**

(73) Titulaire : **BENDIX ESPANA S.A.**
**Balmes 243**
**Barcelona 6 (ES)**

(72) Inventeur : **Bacardit, Juan Simon**
**Calle Mallorca 451**
**Barcelona 13 (ES)**
Inventeur : **Planas, Fermin Pagès**
**Tremolenchs 104 La Garriga Apartado 24**
**Barcelona (ES)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

## Description

La présente invention se réfère à des distributeurs hydrauliques rotatifs destinés à entraîner un dispositif mené et à commander un dispositif moteur à double effet d'assistance du dispositif mené en fonction de l'effort de commande appliqué sur le dispositif récepteur de la force motrice d'actionnement du distributeur.

Dans une réalisation connue de ce type de distributeur, celui-ci comprend d'une part un élément rotatif primaire qui est connecté à un dispositif récepteur de la force motrice (par exemple un volant) et couplé en rotation à un rotor de valve du distributeur, et d'autre part, un élément rotatif secondaire connecté à un dispositif mené (par exemple un pignon de crémaillère) et couplé à un stator de valve coopérant avec le rotor pour commander le moteur ou vérin à double effet d'assistance du dispositif mené. Ces deux éléments se trouvent unis par l'intermédiaire d'un accouplement à course morte qui permet un déplacement angulaire relatif des éléments de valve pour assurer la commande du dispositif moteur d'assistance et, en arrivant en fin de course morte, l'entraînement simultané du dispositif mené. Ces deux éléments sont d'autre part reliés directement par un organe élastique qui assure une position de centrage réciproque des deux éléments quand le distributeur est au repos.

On connaît ainsi l'emploi d'un organe élastique en forme de barre de torsion, logé dans des cavités appropriées des éléments du distributeur ; ce système ne permet toutefois pas l'application d'une précontrainte sur l'organe élastique, bien que ceci soit cependant souhaitable dans de nombreuses applications de ce type de distributeur ; un autre inconvénient de ce type d'organe élastique de liaison est que, pour permettre son installation, il est nécessaire de disposer de l'espace longitudinal nécessaire dans le corps du distributeur, ce que l'on ne peut réaliser dans certaines applications, par exemple, lors de l'emploi de distributeurs ou de valves compactes du type dit « en étoile » où le rotor et le stator sont constitués par des pièces généralement en forme de disques empilées coaxialement et qui n'occupent, par suite, qu'un encombrement axial très réduit.

Le document GB-A-2 083 424 (publié le 24 mars 1982) décrit l'emploi d'un ressort en forme de C entre les extrémités duquel sont maintenues prisonnières sous une précontrainte déterminée des saillies radiales faisant respectivement partie des éléments primaire et secondaire, dans un agencement entraînant une augmentation de la longueur du dispositif, posant des problèmes d'encombrement et de complexité de construction, et nécessitant de conserver un accouplement à course morte distinct entre les éléments primaire et secondaire.

La présente invention a pour objet d'améliorer la construction des distributeurs hydrauliques dotés d'un ressort de centrage en forme de C, du type défini dans le préambule de la revendication 1 et connu par exemple de US-A-3 227 178, en particulier pour les versions utilisant une valve en étoile, dans le but de supprimer les inconvénients mentionnés et permettant la réalisation d'un distributeur particulièrement simple, compact, fiable, assurant une réaction élastique aisément modulable, garantissant un centrage et un accouplement efficaces et supprimant les efforts latéraux sur les éléments rotatifs du distributeur.

Pour ce faire, selon l'invention, le distributeur hydraulique rotatif, du type comprenant un élément rotatif primaire relié à un dispositif d'actionnement et uni en rotation à un rotor de valve, un élément rotatif secondaire relié à un dispositif entraîné et uni en rotation à un stator de valve, le stator et le rotor de valve coopérant mutuellement pour commander un moteur d'assistance à double effet du dispositif entraîné, une partie de l'élément secondaire entourant une partie de l'élément primaire, les éléments primaire et secondaire étant couplés par un dispositif d'accouplement à course morte permettant un déplacement angulaire relatif limité de ces éléments de part et d'autre d'une position centrée de repos, au moins un ressort en C entourant au moins l'élément primaire, des moyens de liaison associant les extrémités séparées du ressort en C à l'élément primaire pour maintenir celui-ci en position centrée de repos, est caractérisé en ce que les zones d'extrémité du ressort comportent des parties faisant saillie radialement et coopérant respectivement, en position centrée de repos, en butée avec des flancs d'au moins une ouverture radiale formée dans la partie de l'élément secondaire entourant l'élément primaire, lesdits moyens de liaison formant partie du dispositif d'accouplement à course morte.

Selon une caractéristique de l'invention, les moyens de liaison comprennent une saillie d'entraînement solidaire de l'élément primaire et traversant une fenêtre formée dans la partie de l'élément secondaire entourant l'élément primaire et insérée entre les extrémités en regard du ressort en C disposé autour de ladite partie de l'élément secondaire, les zones d'extrémité du ressort comprenant des dents faisant saillie radialement vers l'intérieur et portant normalement contre les flancs les plus rapprochés d'ouvertures formées dans ladite partie de l'élément secondaire de part et d'autre de ladite fenêtre.

Selon une caractéristique plus particulière de l'invention, les extrémités du ressort sont repliées pour constituer des pattes radiales s'étendant dans ladite ouverture radiale de la partie de l'élément secondaire et faisant partie desdits moyens de liaison.

Selon une caractéristique préférentielle, le distributeur comprend deux ressorts en C orientés avec leurs extrémités respectives dans des positions diamétralement opposées.

D'autres caractéristiques et avantages de l'invention ressortiront de la description suivante de modes de réalisation, faite en relation avec les dessins annexés, sur lesquels :

la figure 1 est une vue en coupe axiale d'un distributeur selon l'invention, utilisé dans un carter de direction du type à secteur denté et crémaillère ;

la figure 2 est une coupe transversale schématisée du dispositif de réaction et de centrage de la figure 1 ;

la figure 3 est une vue détaillée schématisée, en coupe axiale, de la figure 2 ;

les figures 4, 6, 8 et 10 représentent en coupe certaines variantes de ce dispositif ;

les figures 5, 7, 9 et 11 sont des vues de détail en coupe, similaires à la figure 3 correspondant à la série de figures 4, 6, 8 et 10 ;

la figure 12 est un détail schématique qui montre l'utilisation d'un pion à excentrique de centrage de la valve en étoile de la figure 1 ;

la figure 13 montre une variante de la figure précédente ;

les figures 14 et 15 montrent une autre variante de dispositif de centrage appliquée à la valve en étoile des précédentes figures ;

les figures 16 et 17 montrent un dispositif de centrage par butées de réglage ;

la figure 18 représente une variante du dispositif précédent ; et

la figure 19 est une vue en perspective éclatée d'un dispositif de centrage par réglage des doigts d'entraînement des ressorts en C.

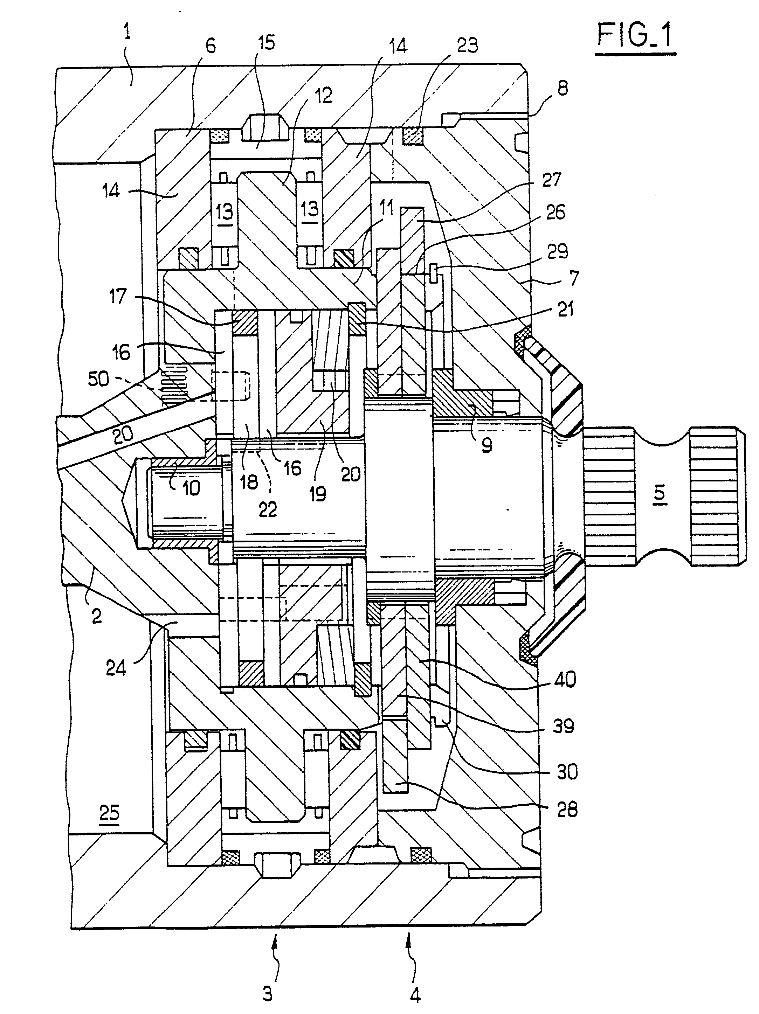

Le repère 1 de la figure 1 indique les parois d'un carter de direction renfermant un secteur denté et une crémaillère (non représentés), actionnés par un moyeu 2 qui reçoit, par l'intermédiaire d'un distributeur rotatif 3 et d'un dispositif de centrage 4, l'entraînement assuré par le volant de direction du véhicule (non représenté), et transmis, par des moyens classiques (également non représentés), à l'arbre d'entrée ou élément primaire 5 du distributeur. L'arbre 5 et le moyeu 2 constituent donc respectivement l'élément primaire et l'élément secondaire du distributeur 3.

Comme on peut le voir, l'ouverture du carter forme une portée intérieure 6 et est fermée par un flasque 7 fileté périphériquement en 8 et vissé dans le carter. L'arbre primaire 5 est supporté en rotation sans possibilité de déplacement axial par les paliers 9 et 10 prévus respectivement dans le flasque 7 et dans l'extrémité adjacente du moyeu 2. Cette extrémité du moyeu a la forme d'une coupelle cylindrique creuse, munie d'une collerette saillant radialement vers l'extérieur 12 maintenue en rotation et sans possibilité de déplacement axial entre deux couronnes de roulement radiales 13, portant axialement contre des rondelles 14 maintenues dans la portée 6 par le flasque couvercle 7 et une bague d'espacement intermédiaire 15. L'intérieur de la coupelle 11 constitue le logement d'un distributeur rotatif du type en étoile constitué par deux plaques de stator 16 séparées par une bague d'entretoise 17 et entre lesquelles est disposé un rotor en étoile 18 ; l'ensemble est maintenu en position de fonctionnement par un plateau de compression 19 et un groupe de rondelles Belleville 20 maintenues par un circlips de butée 21. L'élément primaire 5 traverse librement le plateau 19 et les deux plaques de stator 16 de la valve en étoile, et est accouplé en rotation, par exemple au moyen d'une clavette 22, au rotor en étoile 18 afin que ce dernier puisse être déplacé en rotation par rapport au stator 16, 17 sous l'effet de la rotation dudit élément primaire. Le distributeur en étoile est d'un type décrit dans diverses demandes de brevet antérieures de la demanderesse, notamment le brevet britannique N° 1 576 153 de sorte que l'on considère qu'il est suffisamment connu tant dans sa construction que dans son fonctionnement, dont on omettra de donner ici les détails. Différents joints d'étanchéité tels que 23, ont été représentés, qui servent à isoler les différentes chambres de fonctionnement du dispositif, compte tenu des canaux ou conduits nécessaires, tels que celui représenté en 24, pour acheminer le fluide hydraulique jusqu'aux divers organes du distributeur.

Conformément à la présente invention, le dispositif de centrage 4 constitue en même temps un dispositif de réaction mécanique et un accouplement à course morte permettant de transmettre les efforts appliqués à l'arbre d'entrée 5 à l'élément secondaire 2, indépendamment de l'action du mécanisme d'assistance qui, dans le cas présent, peut être constitué par deux chambres de vérin qui sont définies dans le carter de direction de part et d'autre de l'ensemble crémaillère, et dont l'une est visible et désignée par la référence 25.

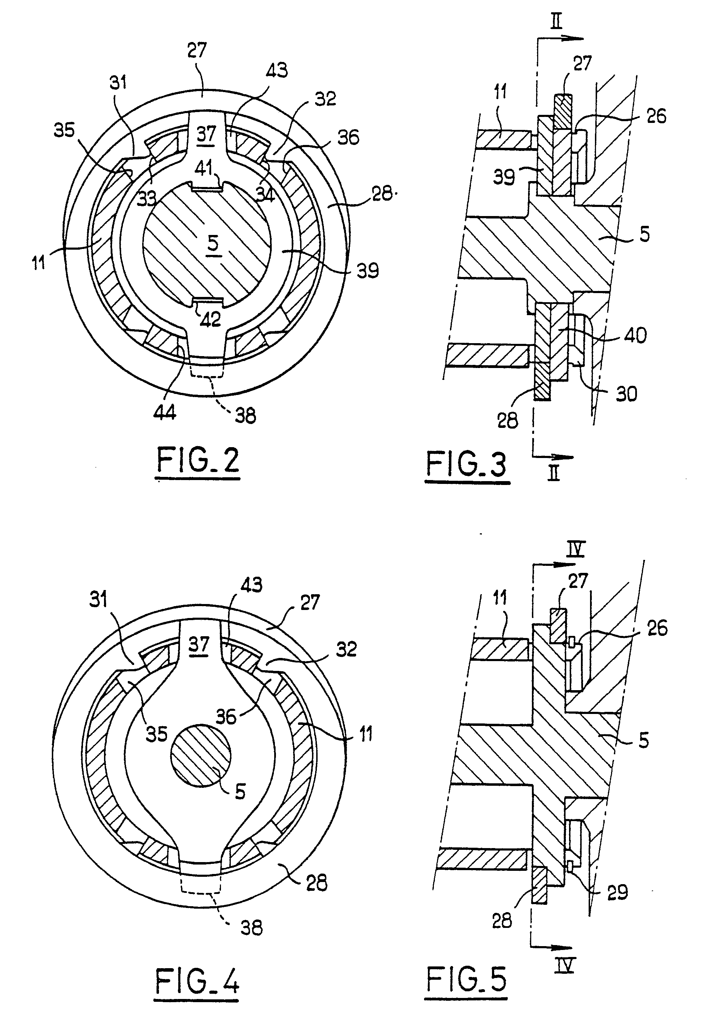

Comme on peut le voir, la paroi de la coupelle 11 dépasse axialement de la zone occupée par le distributeur rotatif et forme un siège de ressort 26 sur lequel sont enfilés un ou de préférence deux ressorts en forme de C, 27 et 28 (voir également la figure 2) qui peuvent être retenus en position axiale par différents moyens, par exemple par un circlips 29 (moitié supérieure de la figure 1) ou par un rebord 30 de l'extrémité de la paroi de la coupelle (moitié inférieure de la fig. 1) qui peut être franchi élastiquement par les ressorts lors du montage. Chaque ressort 27, 28 a une forme plane similaire à une rondelle de sorte que les deux ressorts occupent ensemble une dimension axiale très réduite dans le dispositif ; d'autre part, ils comportent une section transversale décroissant vers les extrémités afin d'égaliser les moments de flexion le long de leur périphérie.

La butée mécanique des ressorts 27 et 28 est assurée par deux dents intérieures 31 et 32 formées sur les zones d'extrémité des branches des ressorts et qui viennent s'appliquer contre les flancs rapprochés 33 et 34 de deux ouvertures adjacentes 35 et 36 aménagées dans la paroi périphérique de la coupelle 11. Les extrémités de chaque ressort viennent s'appliquer avec la précontrainte désirée contre les flancs opposés d'un doigt 37, resp. 38, faisant saillie radialement à partir d'une bague 39, resp. 40, montée autour de l'arbre primaire 5 et reliée en rotation avec celui-ci par l'intermédiaire d'une clavette 41, resp. 42. Chacun de ces doigts 37 et 38 traverse au repos une fenêtre 43 et 44 pratiquée dans la paroi de la coupelle 11 entre chaque paire d'ouvertures 35 et 36, et le creux ou espace libre qui existe de chaque côté des doigts correspond à l'ampleur de la course morte que l'on désire donner au dispositif et qui est nécessaire à l'actionnement du distributeur hydraulique rotatif 3.

En conséquence, si l'arbre primaire 5 tourne dans le sens des aiguilles d'une montre (sur la figure 2), le doigt 37 se déplace vers la droite dans la fenêtre 43, le ressort vient appuyer par sa dent 31 sur le flanc 33 de l'ouverture (gauche) 35 et l'extrémité opposée de ce ressort se séparera de l'autre extrémité en vis-à-vis (gauche), ce qui développera un effort de réaction correspondant, la dent 32 se séparant du flanc 34 sans aucun autre effet. En même temps, les mêmes mouvements se produisent sur les parties homologues correspondantes du doigt diamétralement opposé et, dans les deux cas, de façon exactement symétrique quand le mouvement de l'élément primaire 5 s'effectue dans le sens contraire (antihoraire sur la figure 2).

On notera que les deux ressorts exercent des actions équilibrées sur les éléments primaire et secondaire et qu'il ne se produit pas de réactions latérales contre ceux-ci. Leur fabrication ainsi que celle des pièces intermédiaires 39, 40 est extrêmement simple. On obtient le même fonctionnement avec la forme de réalisation des figs. 4 et 5 qui ne diffère de la précédente que par le fait que les doigts 37 et 38 sont formés d'une seule pièce avec l'élément primaire 5.

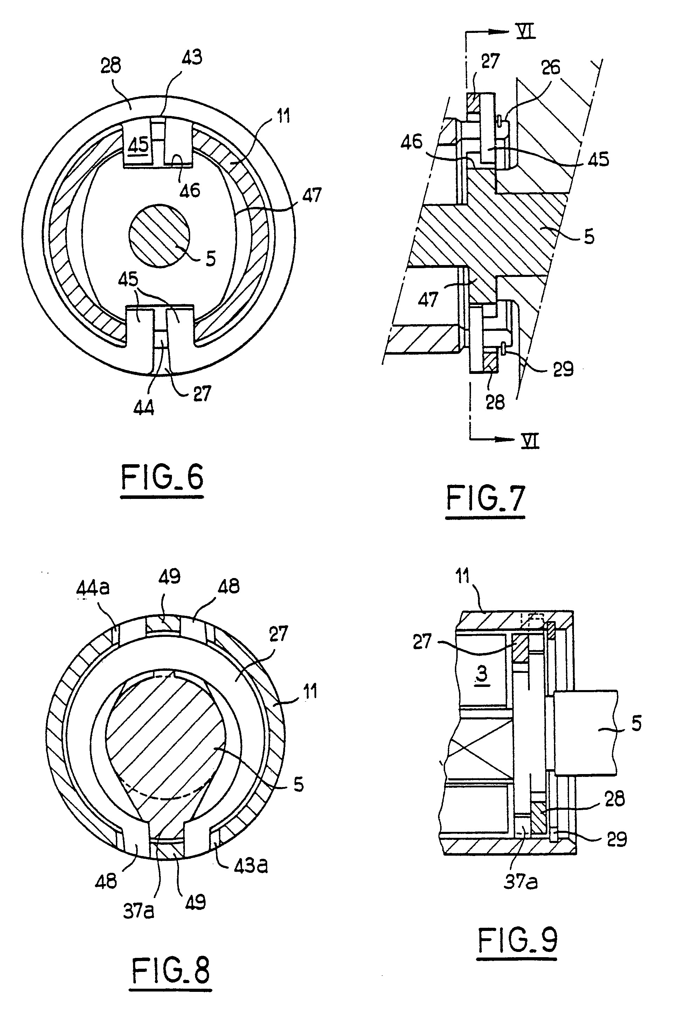

Dans le mode de réalisation des figures 6 et 7, chaque ressort 27, 28 a ses extrémités repliées en forme de pattes 45 tournées sensiblement radialement vers l'intérieur, qui traversent les fenêtres 43, 44 et viennent se loger dans des cavités 46 d'une pièce ayant à peu près la forme d'un disque 47 solidaire de l'élément primaire 5. Ces ressorts travaillent en tension de manière que leurs pattes viennent s'appliquer en même temps contre les côtés des fenêtres et des cavités dimensionnées en conséquence, et servent simultanément de butées de centrage et d'entraînement.

Les figures 8 à 11 montrent deux variantes analogues où les ressorts sont montés à l'intérieur de la coupelle 11, entre celle-ci et l'élément primaire 5.

Dans la première variante des figures 8 et 9, chaque ressort 27, 28 a ses extrémités retournées ayant la forme de pattes tournées vers l'extérieur 48, qui viennent s'appliquer en compression contre les côtés opposés d'une butée centrale 49 formée au centre d'une ouverture 43a, resp. 44a, qui correspond à l'ouverture 43, 44 des modes de réalisation précédents. Les faces en vis-à-vis des pattes 48 font saillie intérieurement par rapport à la butée 49 de sorte qu'un doigt 37a, correspondant au doigt 37 de la première réalisation, vienne s'ajuster entre elles deux.

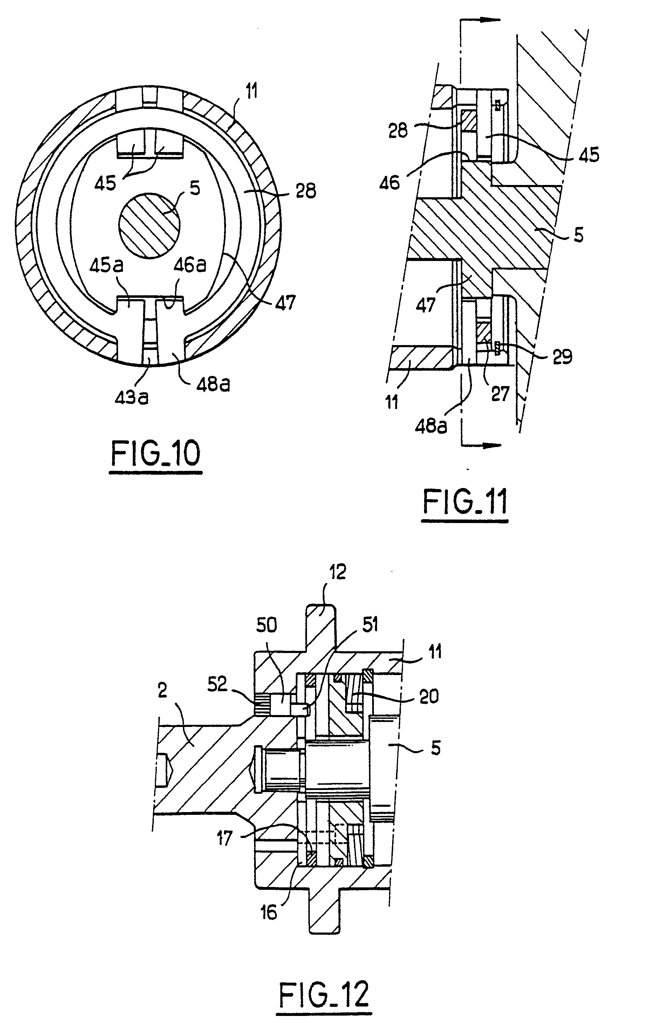

La seconde variante des figures 10 et 11 est en réalité une combinaison des caractéristiques des modes de réalisation des figures 6 et 7, d'une part et 8 et 9 d'autre part, les ressorts comportant, à leurs extrémités, des pattes 45a et 48a tournées respectivement vers l'intérieur et vers l'extérieur, qui s'ajustent respectivement dans une cavité 46a faisant partie de l'élément primaire 5 et dans une fenêtre 43a prévue dans la paroi de la coupelle 11.

Dans de nombreuses applications de ce type de distributeurs hydrauliques rotatifs, en particulier les servodirections pour automobiles, il est nécessaire de centrer le distributeur hydraulique par rapport à l'élément secondaire afin que l'élément primaire prenne une position de repos bien définie. Dans le cas d'un distributeur rotatif du type en étoile on peut utiliser (fig. 12) un pion axial 50 reçu dans la paroi frontale de la coupelle 11 et muni d'une part d'un ergot excentrique 51 qui se loge dans une ouverture prévue en un endroit approprié du stator de la valve et d'autre part d'une partie moletée 52 ; l'extrémité avant du pion peut comporter une rainure destinée à recevoir un outil d'actionnement, non représenté sur la figure. Ce pion 50 est introduit de l'extérieur dans un orifice pratiqué dans le fond de la coupelle 11 ; avant que la partie moletée 52, qui est d'un diamètre légèrement supérieur à cet orifice, commence à pénétrer à l'intérieur, le pion est actionné en rotation pour que l'ergot 51 déplace angulairement le stator de la valve en position désirée, après quoi le pion est enfoncé à blocage dans la position représentée, la partie moletée immobilisant la position de réglage ainsi obtenue.

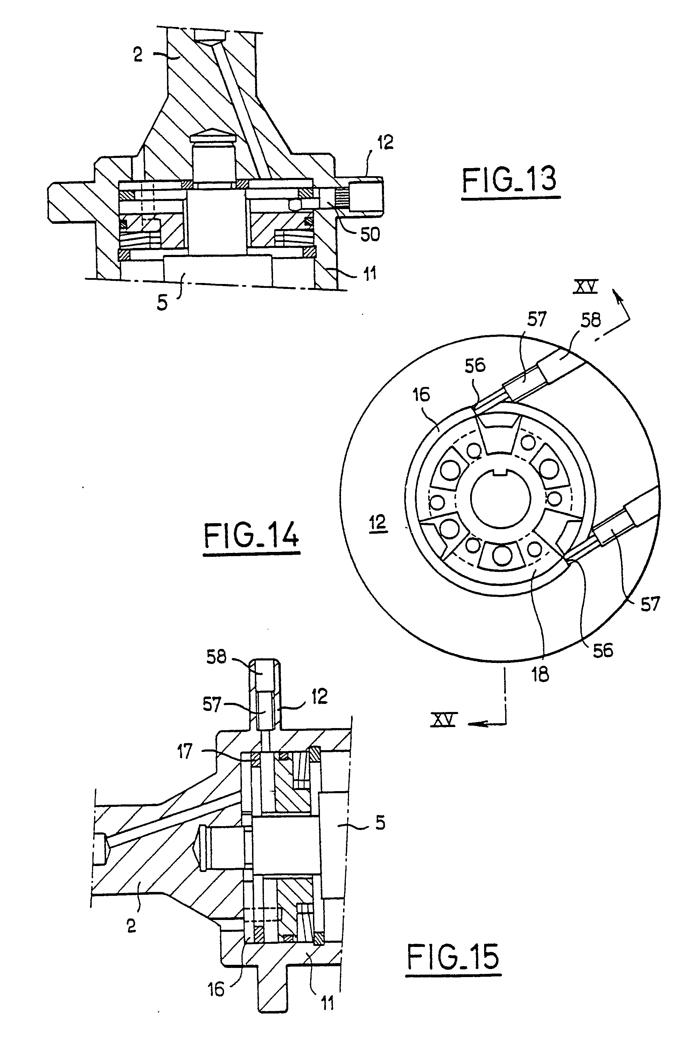

La figure 13 représente une variante de cet agencement qui ne diffère de celui de la figure 12 que par le fait que le pion de centrage 50 est monté radialement dans le plateau 12 de l'organe secondaire 2. Les mêmes repères numériques que ceux indiqués dans le cas précédent ont été conservés sur cette figure.

Les figures 14 et 15 représentent une autre variante du dispositif de centrage, associé à un distributeur du type à rotor en étoile mais qu'il est également possible d'utiliser dans des valves rotatives de divers autres types. Dans le mode de réalisation représenté, l'une des plaques 16 du stator de la valve en étoile comporte deux facettes opposées 56 orientées d'un même côté du dispositif et deux vis de butée 57 d'axes sensiblement parallèles, tangeants à la périphérie du rotor 18, dont la pointe vient s'appuyer contre ces facettes 56 et que l'on peut régler par rapport aux trous taraudés correspondants 58 de manière que lorsqu'on les tourne en sens contraire il soit possible de déplacer le distributeur dans le sens désiré.

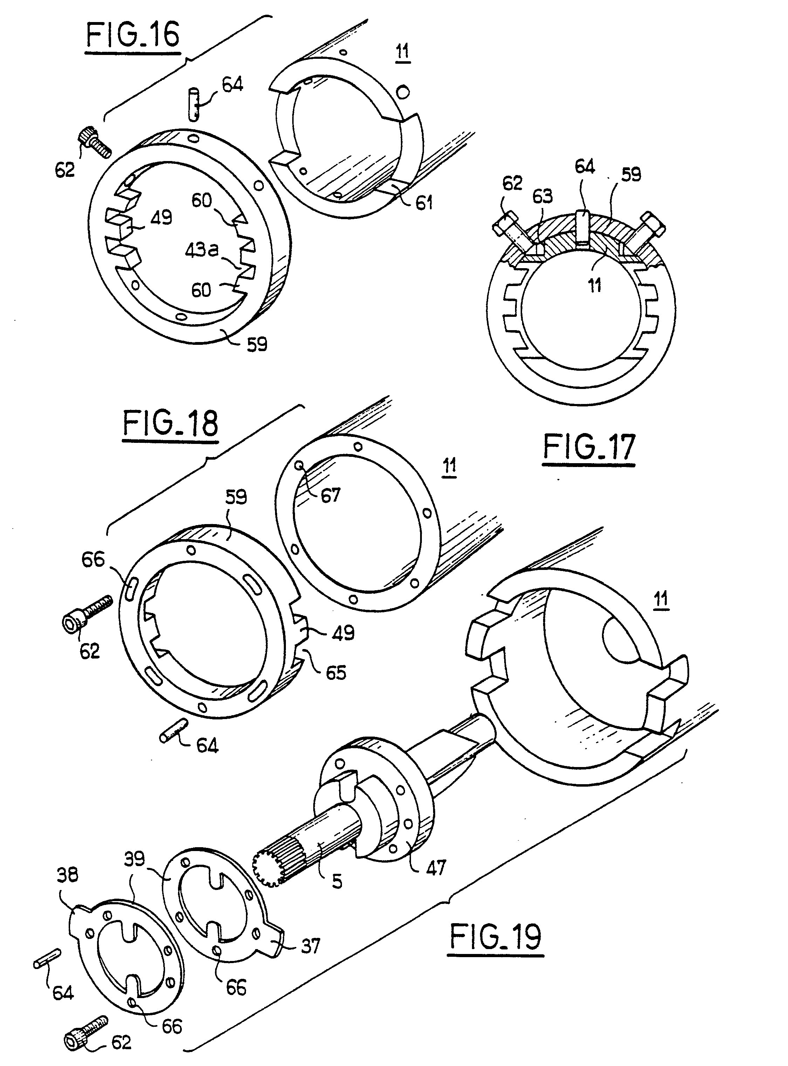

Dans les formes de réalisation de l'invention, telles que celle représentée sur les figures 8 et 9, on peut utiliser un dispositif de centrage tel que celui illustré sur les figures 16 et 17. Dans ce cas, la butée centrale 49 a la forme d'une saillie, identifiée par la même référence, s'étendant radialement à l'intérieur d'une bague 59 et les fenêtres 43a sont pratiquées dans cette bague entre cette butée centrale et deux autres saillies radiales 60 aménagées dans la bague de chaque côté de la butée centrale. La bague 59 s'ajuste en rotation extérieurement autour de l'extrémité de l'élément secondaire 2 (coupelle 11) dont le bord a été muni de deux évidements diamétralement opposés 61 où viennent se loger axialement les saillies 60.

La bague 59 peut être ajustée angulairement à l'aide de deux vis à pointe conique 62 vissées dans la bague et qui viennent porter contre des lamages décalés angulairement formés dans la périphérie de la coupelle, la position de réglage étant rendue permanente par perçage et ajustement d'une clavette de blocage correspondante 64.

On peut dériver facilement de cette construction la variante simplifiée représentée sur la figure 18, où la bague 59 est ajustée axialement contre le bord frontal de la coupelle 11 tandis que la butée centrale 49 et les ouvertures 43a sont formées par des encoches axiales 65 usinées sur le côté coupleur de ladite bague. Dans ce cas, les vis 62 passent axialement dans des trous oblongs 66 de la bague et pénètrent dans des trous taraudés 67 formés dans la face annulaire frontale de la coupelle 11. La position de la clavette de blocage 64 apparaît clairement sur la figure.

On peut de façon similaire agir sur des pièces intermédiaires rendues solidaires de l'élément primaire 5 telles que les pièces 39 de la figure 2 pour effectuer le centrage, comme on peut le voir clairement sur la figure 19.

## Revendications

1. Distributeur hydraulique rotatif, comprenant un élément rotatif primaire (5) relié à un dispositif d'actionnement et uni en rotation à un rotor de valve (18), un élément rotatif secondaire (2) relié à un dispositif entraîné et uni en rotation à un stator de valve (16), le stator et le rotor de valve coopérant mutuellement pour commander un moteur d'assistance à double effet du dispositif entraîné, une partie (11) de l'élément secondaire (2) entourant une partie de l'élément primaire (5), les éléments primaire et secondaire étant couplés par un dispositif d'accouplement à course morte (4) permettant un déplacement angulaire relatif limité de ces éléments, de part et d'autre d'une position centrée de repos, au moins un ressort en C (27, 28) entourant au moins l'élément primaire (5), et des moyens de liaison associant les extrémités séparées du ressort en C à l'élément primaire (5) pour maintenir celui-ci en position centrée de repos, caractérisé en ce que les zones d'extrémité du ressort (27, 28) comportent des parties faisant saillie radialement (31, 32, 45, 48, 45a, 48a) coopérant respectivement, en position centrée de repos, en butée avec des flancs d'au moins une ouverture radiale (35, 36, 43, 43a) formée dans la partie (11) de l'élément secondaire (2) entourant l'élément primaire (5), lesdits moyens de liaison formant partie du dispositif d'accouplement à course morte (4).

2. Distributeur hydraulique selon la revendication 1, caractérisé en ce que les moyens de liaison comprennent une saillie d'entraînement (37, 38) solidaire de l'élément primaire (5), traversant une fenêtre radiale (43) formée dans la partie (11) de l'élément secondaire (2) entourant l'élément primaire et insérée radialement entre les extrémités en regard du ressort en C (27, 28) disposé autour de ladite partie (11) de l'élément secondaire (2), les zones d'extrémité du ressort comprenant des dents (31, 32) faisant saillie radialement vers l'intérieur et portant respectivement, en position centrée de repos, contre les flancs les plus rapprochés (33, 34) d'ouvertures (35, 36) formées dans ladite partie (11) de l'élément secondaire (2), de part et d'autre de ladite fenêtre (43).

3. Distributeur hydraulique selon la revendication 1, caractérisé en ce que les extrémités du ressort (27, 28) sont conformées pour constituer des pattes radiales (45, 48, 45a, 48a) s'étendant dans ladite ouverture radiale (43, 43a) de la partie (11) de l'élément secondaire (2) et faisant partie desdits moyens de liaison.

4. Distributeur hydraulique selon la revendication 3, caractérisé en ce que les pattes des extrémités du ressort (27, 28) comprennent chacune une partie (45, 45a) s'étendant radialement vers l'intérieur et coopérant avec une paroi d'une cavité (46, 46a) solidaire de l'élément primaire (5).

5. Distributeur hydraulique selon la revendication 4, caractérisé en ce que le ressort en C (27, 28) est disposé autour de ladite partie (11) de l'élément secondaire entourant l'élément primaire (5).

6. Distributeur hydraulique selon la revendication 3, ou la revendication 4, caractérisé en ce que les pattes d'extrémité du ressort (27, 28) comprennent chacune une partie (48, 48a) s'étendant radialement vers l'extérieur dans ladite ouverture (43a) de la partie (11) de l'élément secondaire (2) entourant l'élément primaire, le ressort étant disposé entre ladite partie (11) de l'élément secondaire (2) et l'élément primaire (5).

7. Distributeur hydraulique selon l'une des revendications 4 et 5, caractérisé en ce que les parties s'étendant vers l'intérieur (45) des pattes des extrémités du ressort (27, 28) coopèrent par leurs bords latéraux opposés avec les flancs en regard d'une fenêtre radiale (43, 44, 43a) constituant ladite ouverture radiale formée dans la partie (11) de l'élément secondaire (2) entourant l'élément primaire (5).

8. Distributeur hydraulique selon la revendication 6, caractérisé en ce que les parties s'étendant vers l'extérieur (48) des pattes des extrémités du ressort en C (27, 28) portent respectivement, en position centrée de repos, par leurs faces en regard contre les parois opposées d'une butée centrale (49), s'étendant axialement dans ladite ouverture radiale (43a) de la partie (11) de l'élément secondaire (2), et d'une saillie radiale (37a) solidaire de l'élément primaire (5).

9. Distributeur hydraulique selon l'une des revendications précédentes, caractérisé en ce qu'il comprend deux ressorts en C (27, 28) orientés avec leurs extrémités séparées respectives dans des positions diamétralement opposées.

10. Distributeur hydraulique selon l'une des revendications précédentes, caractérisé en ce qu'il comprend des moyens réglables (50, 57, 59, 62) de centrage de la position de repos de l'élément primaire (5) par rapport à l'élément secondaire (2, 11).

11. Distributeur hydraulique selon la revendication 10, caractérisé en ce que les moyens de centrage réglables (50 ; 57 ; 59) sont prévus sur l'élément secondaire (2, 11).

12. Distributeur hydraulique selon la revendication 10, caractérisé en ce que les moyens de centrage réglables (62, 64) sont prévus sur l'élément primaire (5).

13. Distributeur hydraulique selon la revendication 8 et la revendication 11, caractérisé en ce que l'ouverture de couplage (43a) et la butée centrale (49) sont formées dans une pièce rapportée (59) appliquée sur l'élément secondaire (2, 11) et réglable angulairement autour de son axe.

14. Distributeur hydraulique selon la revendication 13, caractérisé en ce que la pièce rapportée est une bague (59) disposée autour de l'élément secondaire (2, 11) et munie de saillies internes (60) qui forment l'ouverture de couplage (43a) et la butée centrale (49), et en ce que ladite partie (11) de l'élément secondaire (2) comporte des ouvertures (61) de passage de ces saillies.

15. Distributeur hydraulique selon la revendication 13, caractérisé en ce que la pièce rapportée est une bague (59) appliquée axialement contre le bord frontal de ladite partie (11) de l'élément secondaire (2) et munie, sur sa face d'accouplement, d'encoches (65) formant l'ouverture de couplage (43a) et la butée centrale (49).

16. Distributeur hydraulique selon la revendication 2 et la revendication 12, caractérisé en ce que la saillie d'entraînement (37, 38) est formée par une pièce intermédiaire (39) ajustée angulairement et clavetée (64) sur un plateau faisant partie de l'élément primaire (5).

17. Distributeur hydraulique selon la revendication 10, caractérisé en ce que les moyens de centrage comprennent un pion (50) muni de deux parties excentrées, l'une (51) d'elles fixant la position angulaire du stator de valve (16), l'autre (52) étant ajustée angulairement et fixée dans un trou de l'organe secondaire (2).

18. Distributeur hydraulique selon la revendication 10, caractérisé en ce que les moyens de centrage comprennent deux vis de pression (57) montées dans des trous taraudés (58) de l'élément secondaire (2, 11) et agissant en opposition sur une portée périphérique (56) du stator de valve (16).

## Claims

1. Rotary hydraulic distributor comprising a primary rotary element (5) coupled to an actuating device and connected for rotation with a valve rotor (18), a secondary rotary element (2) coupled to a driven device and connected for rotation with a valve stator (16), the valve stator and valve rotor mutually cooperating to control a double acting servo motor of the driven device, a portion (11) of the secondary element (2) enclosing a portion of the primary element (15), the primary and secondary elements being coupled by a lost motion coupling device (4) permitting a limited relative angular displacement of said elements on either side from a central rest position, at least one C-shaped spring (27, 28) enclosing at least the primary element (5) and connection means associating the separate extremities of the C-spring to the primary element (5) in order to maintain the latter in the central rest position, characterized in that the extremity zones of the spring (27, 28) comprise radially projecting portions (31, 32, 45, 48, 45a, 48a) cooperating, respectively, in the central rest position, in abutting relationship with sides of at least one radial opening (35, 36, 43, 43a) formed in the portion (11) of the secondary element (2) enclosing the primary element (5), said connection means (5) forming part of the lost motion coupling device (4).

2. Hydraulic distributor according to claim 1, characterized in that the connection means comprise a driven projection (37, 38) fixed to the primary element (5), traversing a radial window (43) provided in the portion (11) of the secondary element (2) enclosing the primary element, and inserted radially between the opposite extremities of the C-spring (27, 28) disposed about said portion (11) of said secondary element (2), the extremity zones of the spring comprising teeth (31, 32) radially projecting towards the interior and engaging, respectively, in the central rest position the closest sides (33, 34) of openings (35, 36) formed in said portion (11) of the secondary element (2) on opposite sides of said window (43).

3. Hydraulic distributor according to claim 1, characterized in that the extremities of the spring (27, 28) are shaped to constitute radial lugs (45, 48, 45a, 48a) extending into said radial opening (43, 43a) of said portion (11) of the secondary element (2) and forming part of said connection means.

4. Hydraulic distributor according to claim 3, characterized in that the lugs of the extremities of the spring (27, 28) each comprise a portion (45, 45a) extending radially towards the interior and cooperating with a wall of a cavitiy (46, 46a) fixed to the primary element (5).

5. Hydraulic distributor according to claim 4, characterized in that the C-spring (27, 28) is disposed about said portion (11) of the secondary element enclosing the primary element (5).

6. Hydraulic distributor according to claim 3 or claim 4, characterized in that the lugs of the extremity of the spring (27, 28) each comprise a portion (48, 48a) extending radially towards the exterior into said opening (43a) of the portion (11) of the secondary element (2) enclosing the primary element, the spring being disposed between said portion (11) of the secondary element (2) and the primary element (5).

7. Hydraulic distributor according to any of claims 4 and 5, characterized in that the portions extending towards the interior (45) of the lugs of the extremities of the spring (27, 28) cooperate by their opposite lateral edges with the opposite sides of a radial window (43, 44, 43a) constituting said radial opening formed in said portion (11) of the secondary element (2) enclosing the primary element (5).

8. Hydraulic distributor according to claim 6, characterized in that the portions extending towards the exterior (48) of the lugs of the extremities of the C-spring (27, 28) engage, respectively, in the central rest position by their opposite faces the opposite walls of a central abutment (49) extending axially into the radial opening (43a) of said portion (11) of the secondary element (2), and of a radial projection (37a) fixed to the primary element (5).

9. Hydraulic distributor according to any of the preceeding claims, characterized in that it comprises two C-springs (27, 28) directed with their respective separate extremities towards diametrically opposite positions.

10. Hydraulic distributor according to any of the preceeding claims, characterized in that it comprises adjustable centering means (50, 57, 59, 62) for centering the rest position of the primary element (5) with respect to the secondary element (2, 11).

11. Hydraulic distributor according to claim 10, characterized in that the adjustable centering means (50 ; 57 ; 59) are provided on the secondary element (2, 11).

12. Hydraulic distributor according to claim 10, characterized in that the adjustable centering means (62, 64) are provided on the primary element (5).

13. Hydraulic distributor according to claim 8 or claim 11, characterized in that the coupling opening (43a) and the central abutment (49) are provided on a member (59) applied on the secondary element (2, 11) and angularly adjustable about its axis.

14. Hydraulic distributor according to claim 13, characterized in that said member is a ring (59) disposed about the secondary element (2, 11) and provided with internal projections (60), which form the coupling opening (43a) and the central abutment (49), and in that said portion (11) of the secondary element (2) comprises openings (61) for the passage of said projections.

15. Hydraulic distributor according to claim 13, characterized in that said member is a ring (59) axially applied against the forward edge of said portion (11) of the secondary element (2) and provided at its coupling face with cutouts (65) forming a coupling opening (43a) of the central abutment (49).

16. Hydraulic distributor according to claim 2 and claim 12, characterized in that the driven projection (37, 38) is formed by an intermediary member (39) angularly adjustable and keyed (64) to a plate forming part of the primary element (5).

17. Hydraulic distributor according to claim 10, characterized in that the centering means comprise a member (50) provided with two excentric portions, one (51) of which fixes the angular position of the valve stator (16) and the other (52) of which is angularly adjustable and fixed in a hole of the secondary element (2).

18. Hydraulic distributor according to claim 10, characterized in that the centering means comprise two pressure bolts (57) mounted in tap holes (58) of the secondary element (2, 11) and oppositely acting on a peripheral abutment (56) of the valve stator (16).

**Patentansprüche**

1. Hydraulischer Rotationsverteiler mit einem ersten Drehkörper (5), der mit einer Betätigungsvorrichtung gekoppelt und mit einem Ventilrotor (18) drehfest verbunden ist, einem zweiten Drehkörper (2), der mit einer getriebenen Vorrichtung gekoppelt und mit einem Ventilstator (16) drehfest verbunden ist, wobei der Ventilstator und -rotor zusammenwirken, um einen doppelt wirkenden Servomotor der getriebenen Vorrichtung zu steuern, wobei ein Abschnitt (11) des zweiten Drehkörpers (2) einen Abschnitt des ersten Drehkörpers (5) umgibt, der erste und zweite Drehkörper durch eine Totgangverbindung (4) gekoppelt sind, die eine begrenzte Winkelverschiebung zwischen den beiden Drehkörpern beidseitig zu einer zentralen Ruhestellung erlaubt, mindestens eine C-förmige Feder (27, 28) zumindest den ersten Drehkörper (5) umgibt und Verbindungsmittel die getrennten Enden der C-förmigen Feder dem ersten Drehkörper (5) zuordnen, um diesen in der zentralen Ruhestellung zu halten, dadurch gekennzeichnet, daß die Endbereiche der Feder (27, 28) radial vorstehende Abschnitte (31, 32, 45, 48, 45a, 48a) aufweisen, die in der zentralen Ruhestellung an Seiten zumindest einer radialen Öffnung (35, 36, 43, 43a) in dem den ersten Drehkörper (5) umgebenden Abschnitt (11) des zweiten Drehkörpers (2) anliegen, wobei die Verbindungsmittel einen Teil der Totgangverbindung (4) bilden.

2. Hydraulischer Verteiler nach Anspruch 1, dadurch gekennzeichnet, daß die Verbindungsmittel einen Mitnehmervorsprung (37, 38) aufweisen, der mit dem ersten Drehkörper (5) fest verbunden ist, durch ein radiales Fenster (43) in dem den ersten Drehkörper umgebenden Abschnitt (11) des zweiten Drehkörpers (2) verläuft und radial zwischen die gegenüberstehenden Enden der C-förmigen Feder (27, 28) eingesetzt ist, die um besagten Abschnitt (11) des zweiten Drehkörpers (2) herum angeordnet ist, wobei die Endbereiche der Feder Zähne (31, 32) aufweisen, die radial nach innen vorstehen und in der zentralen Ruhestellung an den nächstliegenden Seiten (33, 34) von Öffnungen (35, 36) anliegen, die in dem besagten Abschnitt (11) des zweiten Drehkörpers (2) beidseitig zu dem Fenster (43) gebildet sind.

3. Hydraulischer Verteiler nach Anspruch 1, dadurch gekennzeichnet, daß die Enden der Feder (27, 28) so ausgebildet sind, daß sie radiale Ansätze (45, 48, 45a, 48a) bilden, die sich in die radiale Öffnung (43, 43a) des besagten Abschnittes (11) des zweiten Drehkörpers (2) erstrecken und einen Teil der Verbindungsmittel bilden.

4. Hydraulischer Verteiler nach Anspruch 3, dadurch gekennzeichnet, daß die Ansätze der Enden der Feder (27, 28) jeweils einen Abschnitt (45, 45a) aufweisen, der sich radial nach innen erstreckt und mit einer mit dem ersten Drehkörper (5) verbundenen Wand einer Ausnehmung (46, 46a) zusammenwirkt.

5. Hydraulischer Verteiler nach Anspruch 4, dadurch gekennzeichnet, daß die C-förmige Feder (27, 28) um den den ersten Drehkörper (5) umgebenden Abschnitt (11) des zweiten Drehkörpers herum angeordnet ist.

6. Hydraulischer Verteiler nach Anspruch 3 oder 4, dadurch gekennzeichnet, daß die Ansätze der Enden der Feder (27, 28) jeweils einen Abschnitt (48, 48a) aufweisen, der sich radial nach außen in die Öffnung (43a) des den ersten Drehkörper umgebenden Abschnittes (11) des zweiten Drehkörpers (2) erstreckt, wobei die Feder zwischen dem besagten Abschnitt (11) des zweiten Drehkörpers (2) und dem ersten Drehkörper (5) angeordnet ist.

7. Hydraulischer Verteiler nach einem der Ansprüche 4 und 5, dadurch gekennzeichnet, daß die sich nach innen erstreckenden Abschnitte (45) der Ansätze an den Enden der Feder (27, 28) an ihren entgegengesetzten seitlichen Rändern mit den gegenüberliegenden Seiten eines radialen Fensters (43, 44, 43a) zusammenwirken, das die radiale Öffnung bildet, welche in dem den ersten Drehkörper (5) umgebenden Abschnitt (11) des zweiten Drehkörpers (2) vorgesehen ist.

8. Hydraulischer Verteiler nach Anspruch 6, dadurch gekennzeichnet, daß die sich nach außen erstreckenden Abschnitte (48) der Ansätze an den Enden der C-förmigen Feder (27, 28) in der zentralen Ruhestellung jeweils mit ihren gegenüberliegenden Seiten an den entgegengesetzten Wänden eines zentralen Anschlages (49), der sich axial in die radiale Öffnung (43a) des besagten Abschnittes (11) des zweiten Drehkörpers (2) erstreckt, sowie eines mit dem ersten Drehkörper (5) fest verbundenen radialen Vorsprungs (37a) anliegen.

9. Hydraulischer Verteiler nach einem der vorhergehenden Ansprüche, dadurch gekennzeichnet, daß er zwei C-förmige Federn (27, 28) aufweist, die mit ihren getrennten Enden jeweils in diametral entgegengesetzte Positionen gerichtet sind.

10. Hydraulischer Verteiler nach einem der vorhergehenden Ansprüche, dadurch gekennzeichnet, daß er verstellbare Zentriermittel (50, 57, 59, 62) zur Zentrierung der Ruhestellung des ersten Drehkörpers (5) bezüglich des zweiten Drehkörpers (2, 11) aufweist.

11. Hydraulischer Verteiler nach Anspruch 10, dadurch gekennzeichnet, daß die verstellbaren Zentriermittel (50; 57; 59) an dem zweiten Drehkörper (2, 11) vorgesehen sind.

12. Hydraulischer Verteiler nach Anspruch 10, dadurch gekennzeichnet, daß die verstellbaren Zentriermittel (62, 64) an dem ersten Drehkörper (5) vorgesehen sind.

13. Hydraulischer Verteiler nach Anspruch 8 und 11, dadurch gekennzeichnet, daß die Öffnung (43a) und der zentrale Anschlag (49) an einem Bauteil (59) gebildet sind, das an dem zweiten Drehkörper (2, 11) aufgesetzt und um seine Achse winkelverstellbar ist.

14. Hydraulischer Verteiler nach Anspruch 13, dadurch gekennzeichnet, daß das aufgesetzte Bauteil ein Ring (59) ist, der um den zweiten Drehkörper (2, 11) herum angeordnet und mit inneren Vorsprüngen (60) versehen ist, die die Öffnung (43a) und den zentralen Anschlag (49) bilden, und daß der besagte Abschnitt (11) des zweiten Drehkörpers (2) Öffnungen (61) für den Durchtritt dieser Vorsprünge aufweist.

15. Hydraulischer Verteiler nach Anspruch 13, dadurch gekennzeichnet, daß das aufgesetzte Bauteil ein Ring (59) ist, der axial an dem vorderen Rand des besagten Abschnittes (11) des zweiten Drehkörpers (2) anliegt und an seiner Verbindungsfläche mit Einschnitten (65) versehen ist, die die Öffnung (43a) und den zentralen Anschlag (49) bilden.

16. Hydraulischer Verteiler nach Anspruch 2 und 12, dadurch gekennzeichnet, daß der Mitnehmervorsprung (37, 38) von einem Zwischenteil (39) gebildet wird, das winkelverstellbar ist und verkeilt (64) ist mit einer Platte, die einen Teil des ersten Drehkörpers (5) bildet.

17. Hydraulischer Verteiler nach Anspruch 10, dadurch gekennzeichnet, daß die Zentriermittel aus einem Teil (50) mit zwei exzentrischen Abschnitten bestehen, von denen der eine (51) die Winkelstellung des Ventilstators (16) festlegt und der andere (52) winkelverstellbar und in einem Loch des zweiten Drehkörpers (2) festgelegt ist.

18. Hydraulischer Verteiler nach Anspruch 10, dadurch gekennzeichnet, daß die Zentriermittel aus zwei Druckschrauben (57) bestehen, die in Gewindebohrungen (58) des zweiten Drehkörpers (2, 11) eingeschraubt sind und in entgegengesetzter Richtung auf einen Umfangsanschlag (56) des Ventilstators (16) einwirken.

0 077 710

FIG. 1

FIG.2

FIG.3

FIG.4

FIG.5

FIG.6

FIG.7

FIG.8

FIG.9

**FIG. 10**

**FIG. 11**

**FIG. 12**

FIG. 13

FIG. 14

FIG. 15

FIG.16

FIG.17

FIG.18

FIG.19